Europäisches Patentamt

(19) European Patent Office

Office européen des brevets

(11) Publication number: **0 130 227**
**B1**

(12) **EUROPEAN PATENT SPECIFICATION**

(45) Date of publication of patent specification: **18.03.87**

(21) Application number: **83106442.3**

(22) Date of filing: **01.07.83**

(51) Int. Cl.⁴: **G 21 C 19/00**

(54) **Method of loading nuclear fuel assemblies.**

(43) Date of publication of application:
**09.01.85 Bulletin 85/02**

(45) Publication of the grant of the patent:
**18.03.87 Bulletin 87/12**

(84) Designated Contracting States:
**DE FR SE**

(56) References cited:
**DE-A-3 022 747**
**FR-A-2 200 588**
**FR-A-2 278 136**
**US-A-4 158 599**

(73) Proprietor: **HITACHI, LTD.**
**6, Kanda Surugadai 4-chome Chiyoda-ku**
**Tokyo 100 (JP)**

(72) Inventor: **Tsuchiya, Toyohiki**
**2-10-10, Nishinarusawa-cho**
**Hitachi-shi Ibaraki-ken (JP)**

(74) Representative: **Patentanwälte Beetz sen. -**
**Beetz jun. Timpe - Siegfried - Schmitt-Fumian**
**Steinsdorfstrasse 10**
**D-8000 München 22 (DE)**

Courier Press, Leamington Spa, England.

EP 0 130 227 B1

## Description

This invention relates to a method of loading nuclear fuel assemblies in the core of a nuclear reactor, and more particularly to a method of loading nuclear fuel assemblies which is suitable to finish the loading work in a shorter term while ensuring the nuclear safety.

The conventional method of loading nuclear fuel assemblies in the core of a nuclear reactor required much preparations as well as hard works extending over a long term as follows. Special neutron sources and neutron detectors for loading fuel assemblies are necessary. Further, since loading of fuel assemblies is carried out in the state of filled cores, i.e., in the water, it is difficult to operate the loading of fuel assemblies. Moreover, after completion of the entire core, the neutron sources and neutron detectors having been used for loading fuel assemblies must be replaced by reactor core starting-up neutron sources with very high intensity of gamma rays and reactor core starting-up neutron detectors, respectively. In addition, confirmation of the complete core is difficult because it is under water.

This invention has been accomplished in view of the above. It is an object of this invention to provide a method of loading nuclear fuel assemblies which does not require much preparations as well as hard works extending over a long term, and which can improve the operability and working efficiency so much thereby to shorten the term necessary for loading fuel assemblies.

A first feature of this invention is in that the reactor core is made empty with no coolant being charged therein, a core starting-up neutron source with a negligible level of radiation exposure and a core starting-up neutron detector are set in the reactor core, fuel assemblies are loaded successively to form a complete core, and then thus loaded core is filled with coolant after confirmation thereof. A second feature of this invention is in that at the time of loading fuel assemblies in the above method, fuel assemblies are loaded in the shape of a checkerboard to form a half core, the reactor is filled with coolants, fuel assemblies are loaded in the remaining half core to form a complete core, and then confirmation of thus loaded core is performed.

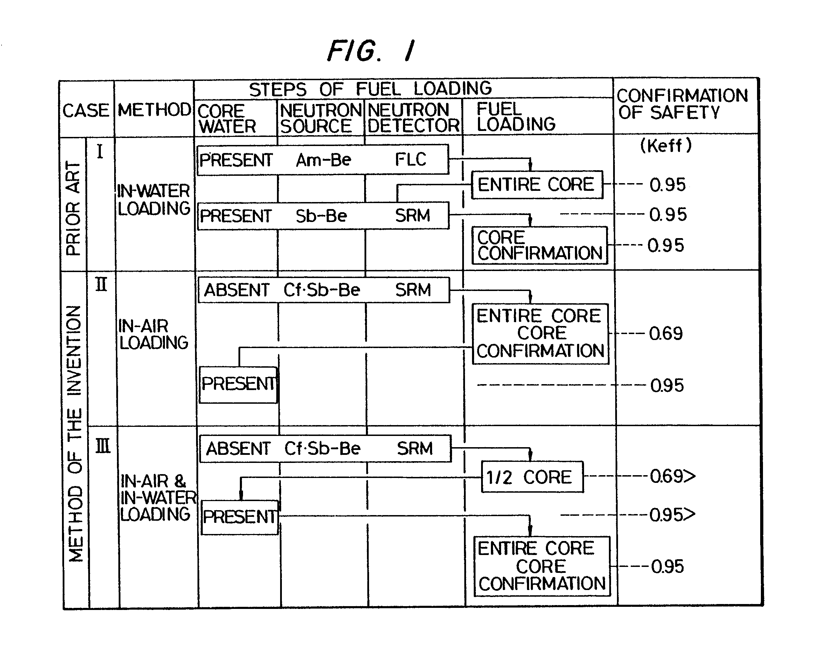

In the following one embodiment of the method according to this invention will be described in detail by referring to Figs. 1 through 5 in comparison with the prior art.

Fig. 1 is an explanatory view showing summaries of the prior art and the method of this invention. In the case I representing the prior art, a reactor core is first filled with water, and a fuel loading neutron source (Am—Be) and a fuel loading neutron detector (FLC) are set in the reactor core. In this state, fuel assemblies are loaded successively to form a complete core. After that, the neutron source (Am-Be) is exchanged for a core starting-up neutron source (Sb—Be) with very high intensity of gamma rays, and the neutron detector (FLC) is also switched to a core starting-up neutron detector (SRM). And finally visual confirmation is carried out in the water to check whether all of the fuel assemblies have been loaded properly with no problem. According to a series of these operations, the nuclear safety is ensured satisfactorily from the standpoint of preventing criticality accidents. That is, an effective multiplication factor ($k_{eff}$) is to be 0.95 in, for example, the standard plant core of 460 MWe, even at the time of completion of the entire core where the maximum reactivity is applied.

A first method (case II) of this invention will be described hereinafter. A reactor core is first made empty with no water being charged therein, and a core starting-up neutron source (Cf—Sb—Be) with very low intensity of gamma rays and a core starting-up neutron detector (SRM) are set in the reactor core. In this state fuel assemblies are loaded successively to form a complete core, and then visual confirmation of the core is performed. After that, the loaded reactor core is filled with water. Similarly to the case I, according to a series of these operations, the nuclear safety is ensured satisfactorily from the standpoint of preventing criticality accidents. That is, an effective multiplication factor ($k_{eff}$) in, for example, the standard plant core of 460 MWe is to be 0.69 at the time of completion of the entire core in the air and to be 0.95 in the water filled state.

A second method (case III) of this invention will be described hereinafter. Similarly to the case II, a core starting-up neutron source (Cf—Sb—Be) and a core starting-up neutron detector (SRM) are set in a reactor core being made empty. Then, fuel assemblies are loaded in the shape of a checkerboard to form a half core. This is aimed at restricting the number of control rods to be arranged and the applied reactivity in the air as low as possible in boiling water reactors. Subsequently, after filling the core with water, fuel assemblies are loaded in the remaining half core to form a complete core, and thus loaded core is visually confirmed. In this case III, an effective multiplication factor is to be less than 0.69 for the half core in the air, less than 0.95 for the half core filled with water, and 0.95 for the entire core filled with water.

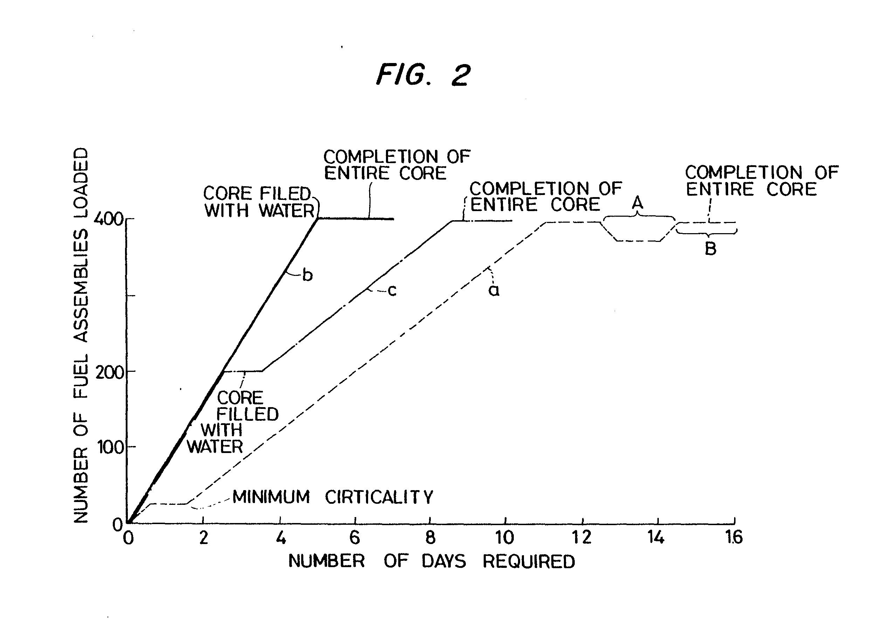

Fig. 2 is a graph showing the comparison of days required for loading fuel assemblies in the cases I through III shown in Fig. 1, in which the axis of abscissa represents the number of days required and the axis of ordinates represents the number of fuel assemblies loaded. In the graph, a curve *a* denotes the case I, a curve *b* denotes the case II, and a curve *c* denotes the case III. In the case I, there are included the number of days A necessary for drawing out a part of fuel assemblies and exchanging the neutron sources as well as the number of days B necessary for exchanging the neutron detectors, so that it takes about 16 days (0.6 hour/each fuel loading). Meanwhile, the case II of this invention requires 6 days (0.3 hour/each fuel loading) and the case III requires 9 days (0.3 hour/each fuel loading in the first half, 0.6 hour/each fuel loading in the latter half).

**0 130 227**

Table 1 shows the comparison of core starting-up neutron sources used in the cases I, II and III shown in Fig. 1.

3

TABLE 1

| Items | | Case I | Case II |
|---|---|---|---|
| Material | | $^{124}Sb - Be$ | $Cf - ^{123}Sb - Be$ |
| Weight | Cf (mg) | — | 0.5 (for initial core) |
| | Sb (g) | 120 | 120 (for secondary core) |
| | Be (g) | 160 | 160 (for secondary core) |
| Neutron intensity at the time of core loading (n/s) | | $1.1 \times 10^9$ | $1.0 \times 10^9$ |
| Curie (Ci) | | (γ ray) 670 | (neutron ray) 0.25 |
| Half life | Cf | — | 265 years |
| | Sb | 60 days | 60 days |
| Exposure Source | Initial core | Sb—Be((γ,n) reaction) | Cf (spontaneous fission) |
| | After second cycle | Sb—Be((γ,n) reaction) | Sb—Be((γ,n) reaction) |
| Dose rate (in the air) | Initial core | γ ray 470 R/hrat 1m | Neutron ray 1.1 R/hrat 1m<br>γ ray 0.08 R/hrat 1m |

0 130 227

As will be seen from Table 1, the intensity of neutron at the time of core loading becomes almost equal in all the cases I, II and III, while the core starting-up neutron source (Cf—Sb—Be) for both cases II and III of this invention is superior than that (Sb—Be) for the case I in points of half life as well as dose rate. More specifically, the neutron source (Cf—Sb—Be) has a half life of 2.65 years so that it can offer the large degree of freedom in the process of loading fuel assemblies. Further, since the value of RHM is 1.2 (i.e., dose rate at a distance of 1 m is 1.2 roentgen/hour), it is possible for the neutron source to be handled in the air by keeping a sufficiently large distance and this makes it possible that the operator steps on the upper grid of the core at the time of fuel loading so as to guide the loading of fuel assemblies (a simple radiation shielding plate is provided if necessary). Although the nuclear state of the reactor core must be monitored continuously during the loading of fuel assemblies using the core starting-up neutron detector (SRM), a level of counting rate suitable for monitoring can be assured in both cases II and III by properly setting the intensity of neutron source, the detection sensitivity of neutron detector (SRM), etc.

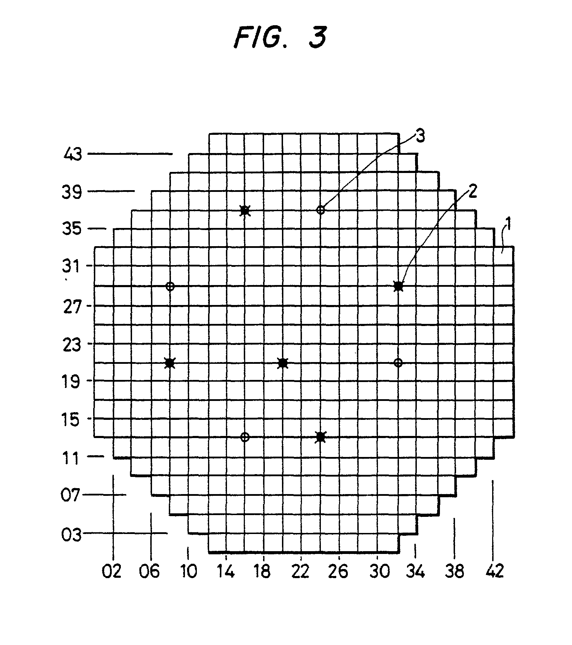

Fig. 3 is a sectional view showing one example of arrangement of the fuel assemblies having been loaded, the plural core starting-up neutron sources (Cf—Sb—Be) and the plural core starting-up neutron detectors (SRM) in the reactor core. In this figure, designated at 1 is (a) fuel (assembly), 2 is a core starting-up neutron source (Cf—Sb—Be), and 3 is a core starting-up neutron detector (SRM).

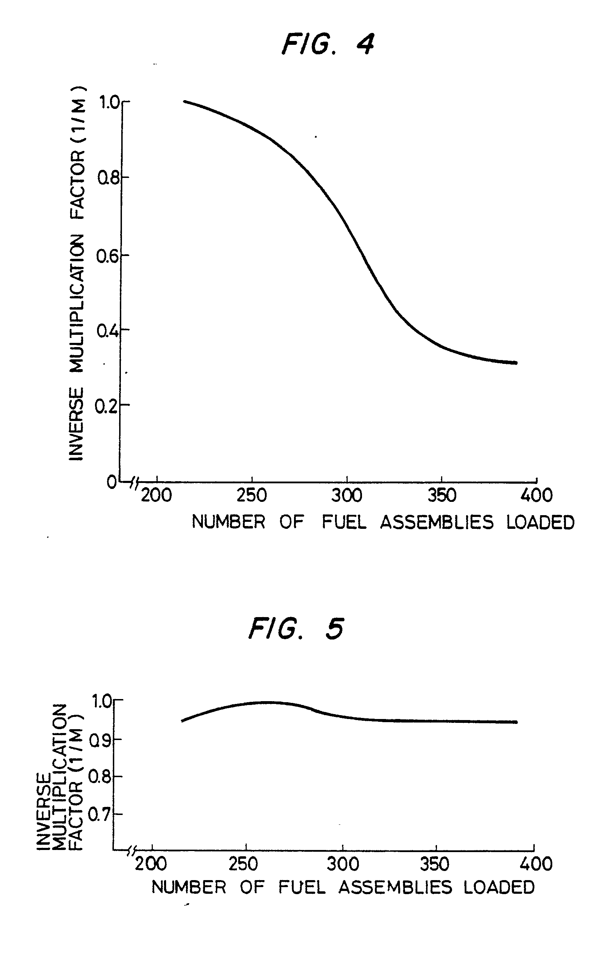

Table 2 and graphs illustrated in Figs. 4 and 5 prove the fact that the nuclear safety is ensured satisfactorily form the standpoint of preventing criticality accidents during the operations of loading fuel assemblies in the methods of the case II and III according to this invention, respectively.

TABLE 2

| | Density of moderator (light water) (g/cc) | Infinitive multiplication factor ($k\infty$) | Effective multiplication factor ($k_{eff}$) |
|---|---|---|---|
| Case I | 1.0 | 1.15 | 0.95 |
| Case II | 0.1 | 0.94 | 0.69 |

Table 2 shows the calculated results of the effective multiplication factors ($k_{eff}$) shown in Fig. 1, in which the result for the case II of this invention was calculated on the assumption that the density of moderator is 0.1 g/cc (the actual value is less than that level).

It will be understood from Table 2 that the effective multiplication factor in the prior art case I assumes 0.95 ($k_{eff}$), while that factor in the case II of this invention assumes 0.69 ($k_{eff}$), and hence that the nuclear safety is ensured satisfactorily in the latter case.

Figs. 4 and 5 are graphs showing the relationships between the number of fuel assemblies loaded and the inverse multiplication factor (i.e., the inverse number of relative ratio for counting rate of the neutron detector), which are to indicate confirmation of subcriticality and confirmation of reactor shut-down allowance, respectively, in the process of loading fuel assemblies in the remaining half core with the core being filled with water after formation of the first half core into the shape of a checkerboard in the case III of this invention shown in Fig. 1 and 2. As will be seen from Figs. 4 and 5, the nuclear safety is ensured satisfactorily also in the case III.

According to the above-mentioned embodiments, i.e., the cases II and III, of this invention, it is not necessary to prepare the fuel loading neutron source (Am—Be) and the fuel loading neutron detector (FLC), and loading of fuel assemblies as well as confirmation of the core can be performed in the air while ensuring the nuclear safety satisfactorily. Thus, both the operability and working efficiency can be improved so much. Further, the fuel loading neutron source is not needed to be exchanged for the core starting-up neutron source and it is also not required to handle the core starting-up neutron source (Sb—Be) with very high intensity of gamma rays. In addition, there is no need of switching the fuel loading neutron detector to the core starting-up neutron detector. As a result, the term necessary for loading fuel assemblies in, for example, the standard plant core of 460 MWe is shortened remarkably down to 6 days in the case II and 9 days in the case III comparing to 16 days that was required in the prior art.

Besides, the reasons why the in-water loading method has been adopted in the prior art (case I) are as follows. It is judged that absolutely secure confirmation must be made with respect to the nuclear quality of design and manufacturing of nuclear fuel assemblies, and shielding is required in handling the neutron source (Sb—Be) with very high intensity of gamma rays. However, the former point can be coped with positive achievements in design and manufacturing of fuel assemblies for boiling water reactors which have been accumulated over many years, and the latter point can be solved by using the neutron source consisted of Cf—Sb—Be according to this invention.

As fully described in the above, this invention can offer such effects as to eliminate a need of much preparations as well as hard works extending over a long term, and to improve both the operability and working efficiency so much, thereby resulting in the shortened term of loading fuel assemblies.

5

Brief Description of the Drawings

Fig. 1 is an explanatory view showing summaries of the prior art method and the method of this invention, Fig. 2 is a graph showing the comparison of days required for loading fuel assemblies in the cases I through III shown in Fig. 1, Fig. 3 a sectional view showing one example of arrangement of the fuel assemblies, the core starting-up neutron sources and the core starting-up neutron detectors in the reactor core, necessary when the method of loading fuel assemblies according to this invention is put into practice, and Figs. 4 and 5 are graphs showing the relationship between the reverse multiplication factor and the number of fuel assemblies loaded.

1 ... fuel (assemblies), 2 ... core starting-up neutron source (Cf—Sb—Be), 3 ... core starting-up neutron detector (SRM).

**Claims**

1. A method of loading nuclear fuel assemblies in the core of a nuclear reactor characterized in that the reactor core is made empty with no coolant being charged therein, a core starting-up neutron source with a negligible level of radiation exposure and a core starting-up neutron detector are set in said reactor core, fuel assemblies are loaded successively to form a complete core, and then said loaded core is filled with coolants after confirmation thereof.

2. A method of loading nuclear fuel assemblies in the core of a nuclear reactor characterized in that the reactor core is made empty with no coolant being charged therein, a core starting-up neutron source with a negligible level of radiation exposure and a core starting-up neutron detector are set in said reactor core, fuel assemblies are loaded in the shape of a checkerboard to form a half core, said reactor is filled with coolant, fuel assemblies are loaded in the remaining half core to form a complete core, and then confirmation of said loaded core is performed.

**Patentansprüche**

1. Verfahren zum Laden von Brennstoffelementen in die Spaltzone eines Kernreaktors, dadurch gekennzeichnet, daß die Reaktorspaltzone ohne Einbringen von Kühlmittel geleert wird, daß eine Spaltzonen-Neutronenanfahrquelle mit vernachlässigbarem Bestrahlungspegel und ein Spaltzonenanfahr-Neutronendetektor in die Spaltzone eingesetzt werden, daß Brennstoffelemente nacheinander geladen werden unter Bildung einer vollständigen Spaltzone, und daß dans die beladene Spaltzone nach Fertigstellung mit Kühlmittel gefüllt wird.

2. Verfahren zum Laden von Brennstoffelementen in die Spaltzone eines Kernreaktors, dadurch gekennzeichnet, daß die Reaktorspaltzone ohne Einbringen von Kühlmittel geleert wird, daß eine Spaltzonen-Neutronenanfahrquelle mit vernachlässigbarem Bestrahlungspegel und ein Spaltzonenanfahr-Neutronendetektor in die Reaktorspaltzone eingesetzt werden, daß Brennstoffelemente schachbrettartig unter Bildung einer halben Spaltzone geladen werden, daß der Reaktor mit Kühlmittel gefüllt wird, daß Brennstoffelemente in die übrige halbe Spaltzone geladen werden unter Bildung einer kompletten Spaltzone, und daß die beladene Spaltzone dann fertiggestellt wird.

**Revendications**

1. Procédé pour charger des assemblages combustibles nucléaires dans le coeur d'un réacteur nucléaire, caractérisé en ce qu'on vide le coeur du réacteur, dans lequel aucun fluide de refroidissement n'est chargé, on dispose dans ledit coeur de réacteur une source de neutrons de démarrage du coeur, possédant un niveau négligeable d'irradiation, et un détecteur de neutrons de démarrage du coeur, on charge successivement des assemblages combustibles de manière à former un coeur complet, puis on remplit ledit coeur chargé, avec des fluides de refroidissement, après validation dudit coeur.

2. Procédé pour charger des assemblages combustibles nucléaires dans le coeur d'un réacteur nucléaire, caractérisé en ce qu'on vide le coeur du réacteur, dans lequel aucun fluide de refroidissement n'est chargé, on dispose dans ledit coeur de réacteur une source de neutrons de démarrage du coeur possédant un niveau négligeable d'irradiation et un détecteur de neutrons de démarrage du coeur, on charge des assemblages combustibles sous la forme d'un damier pour former un demi-coeur, on remplit ledit réacteur avec un fluide de refroidissement, on charge des assemblages combustibles dans le demi-coeur restant de manière à former un coeur complet, puis on effectue la validation dudit coeur chargé.

FIG. 1

| CASE | METHOD | STEPS OF FUEL LOADING | | | | CONFIRMATION OF SAFETY |
| | | CORE WATER | NEUTRON SOURCE | NEUTRON DETECTOR | FUEL LOADING | |
|---|---|---|---|---|---|---|
| **PRIOR ART** I | IN-WATER LOADING | PRESENT | Am-Be | FLC | ENTIRE CORE | (Keff)<br>---- 0.95 |
| | | PRESENT | Sb-Be | SRM | ---- 0.95<br>CORE CONFIRMATION | ---- 0.95 |
| **METHOD OF THE INVENTION** II | IN-AIR LOADING | ABSENT | Cf·Sb-Be | SRM | ENTIRE CORE CORE CONFIRMATION | ---- 0.69 |
| | | PRESENT | | | ---- | ---- 0.95 |
| III | IN-AIR & IN-WATER LOADING | ABSENT | Cf·Sb-Be | SRM | 1/2 CORE | ----0.69> |
| | | PRESENT | | | ----0.95><br>ENTIRE CORE CORE CONFIRMATION | ---0.95 |

0 130 227

FIG. 2

Figure showing the relationship between NUMBER OF FUEL ASSEMBLIES LOADED (vertical axis) and NUMBER OF DAYS REQUIRED (horizontal axis), with curves a, b, c.

## FIG. 3

## FIG. 4

INVERSE MULTIPLICATION FACTOR (1/M)

NUMBER OF FUEL ASSEMBLIES LOADED

## FIG. 5

INVERSE MULTIPLICATION FACTOR (1/M)

NUMBER OF FUEL ASSEMBLIES LOADED